# EUROPÄISCHE PATENTSCHRIFT

(11) **EP 1 330 076 B1**
(45) Veröffentlichungstag und Bekanntmachung des Hinweises auf die Patenterteilung: **19.07.2006**
(21) Anmeldenummer: 03001123.3
(22) Anmeldetag: 20.01.2003
(51) Int. Cl.: H04L 12/28

(54) **Accesspoint mit kombinierten Funkstandards**
Access point having combined radio standards
Point d'accès comprenant des standards radio combinés

(30) Priorität: 21.01.2002 DE 10202141
(43) Veröffentlichungstag der Anmeldung: 23.07.2003
(73) Patentinhaber: Tenovis GmbH & Co. KG, 60326 Frankfurt am Main (DE)
(72) Erfinder: Mäntele, Stefan, 61350 Bad Homburg (DE)
(74) Vertreter: Tergau & Pohl Patentanwälte

(56) Entgegenhaltungen:
- EP-A- 1 119 137
- EP-A- 1 280 296
- WO-A-01/56233
- DE-A- 10 016 622

## Beschreibung

Die Erfindung betrifft ein Funksystem mit einer Basisstation, die eine Einrichtung zum Senden und Empfangen von Signalen nach einem ersten Funkstandard aufweist, wobei die Einrichtung auch für das Senden und Empfangen von Signalen nach einem zweiten Funkstandard vorgesehen ist, der auf einem anderen als dem Frequenzband des ersten Funkstandards arbeitet.

Drahtlose Kommunikationssysteme sind in vielen Variationen bekannt. Dabei nutzen diese Systeme eine Reihe von Funkstandards zur drahtlosen Übertragung von Signalen zwischen sendenden und empfangenden Komponenten. Die verwendeten Funkstandards unterscheiden sich in erste Linie durch ihre Bandbreite und ihre Reichweite. Funkstandards mit einer relativ geringen Reichweite von ca. 10m bis 500m (z.B. DECT, IEEE802.11x, Bluetooth, Hiperlan2 oder HomeRF) eignen sich insbesondere zum Aufbau von lokalen Netzwerken (On-Site-Betrieb). Größere Reichweiten (1km und mehr) kennzeichnen vorzugsweise sogenannte Off-Site-Standards (z.B. UMTS, GSM oder GPRS), die aufgrund ihrer Zellgröße zum Aufbau von größeren bis hin zum globalen Netzwerken verwendet werden.

Ein anderes wichtiges Unterscheidungskriterium dieser Funkstandards bildet insbesondere ihre Eignung für Telefonie- und Datenübertragungsdienste. Die Anforderungen der Übertragungsarten beider Dienste sind komplementär zueinander. Einerseits beansprucht die qualitativ hochwertige Sprach- bzw. Videoübertragung eines Telefoniedienstes einen kontinuierliche Zugriff auf eine geringe Bandbreite. Die Verfügbarkeit dieser Bandbreite muss jedoch unter allen Umständen gewährleistet sein (Quality of Service). Andererseits zeichnet sich eine schnelle Datenübertragung eines Datendienstes insbesondere durch einen unregelmäßigen Wechsel zwischen aktiven Phasen mit einem sehr hohen Bandbreitenbedarf und inaktiven Phasen aus.

Die Konvergenz zwischen Daten- und Telefonnetzen gewinnt bei modernen festverdrahteten Kommunikationssystemen immer mehr an Bedeutung. Analog dazu ist dieser Trend auch bei mobilen Kommunikationssystemen zu beobachten. Derzeit sind lediglich drei der o.g. Funkstandards am Markt präsent, nämlich der DECT-, der IEEE 802.11b- und der Bluetooth-Standard. Keiner dieser etablierten Standards bietet jedoch eine hohe Datenrate und gleichzeitig Quality of Service, was eine Grundvoraussetzung für eine konvergente Übertragung von Sprach- bzw. Videosignalen und Daten ist.

Ein Funksystem mit einer Basisstation, bei der zwei unterschiedliche Funkstandards verwendet werden, ist aus der WO 01/56233 A1 bekannt.

Aus der EP 1 119 137 A ist weiterhin eine Basisstation bekannt, bei der zwei Funkstandards, das Bluetooth und das IEEE802.11 verwendet werden, die gleiche oder verschiedene Frequenzbänder benutzen.

Aus der DE 100 16 622 A ist weiterhin eine Basisstation mit zwei Funkstandards, dem DECT- und Bluetooth- bzw. GSM-Standard bekannt, die ineinander umgesetzt werden können.

Die nachveröffentlichte EP 1 280 296 A beschreibt eine Basisstation mit zwei Funkstandards, wobei der eine Funkstandard zum Datenaustausch und der andere Funkstandard zum Management der Basisstation eingesetzt werden.

Aufgabe der Erfindung ist es, ein Funksystem zur kombinierten Übertragung von Telefonie und Daten zur Verfügung zu stellen.

Diese Aufgabe wird durch ein Funksystem nach Anspruch 1 gelöst. Weitere vorteilhafte Ausbildungen der Erfindung sind in den abhängigen Ansprüchen angegeben.

Die erfindungsgemäße Basisstation nutzt simultan einen ersten Funkstandard für Sprachübertragung und einen zweiten Funkstandard für Datenübertragung, wobei der zweite Funkstandard ein IEEE802.11x-Derivat ist. Hierdurch entsteht die Möglichkeit ein besonders vorteilhaftes On-Site-Funksystem aufzubauen, das für die Übertragung von Sprach- und Datensignalen optimiert ist.

Aufgrund der Kombination eines IEEE802.11x-Derivats zur Datenübertragung mit einem weiteren Funkstandard zur Sprachübertragung innerhalb einer Basisstation sieht der Anwender ein singuläres Funknetz.

Als weiterer Vorteil der Kombination der beiden für unterschiedliche Anwendungen optimierten Funkstandards in einer Basisstation erweist sich, dass hierdurch der Installationsaufwand erheblich reduziert wird, da nur ein Netz aufgebaut und gewartet werden muss. Darüber hinaus werden insbesondere Hardwarekosten eingespart, da zur Anbindung einer solchen Basisstation an eine bestehende Netzinfrastruktur weniger Netzwerkhardware notwendig ist.

Eine vorteilhafte Ausführungsformen der Erfindung sieht die Verwendung von DECT, einem dem DECT verwandten Standard oder Bluetooth als Funkstandard zur Sprachübertragung vor. Dabei ist besonders vom Vorteil, dass diese Funkstandards bereits zur Sprachübertragung weit verbreitet und damit auch hoch verfügbar sind.

Eine weitere vorteilhafte Ausführungsformen der Erfindung sieht die Verwendung des DECT-Standards bzw. eines dem DECT verwandten Standards als Funkstandard zur Sprachübertragung und eines IEEE802.11b-Standards als Funkstandard zur Datenübertragung vor. Vorteilhaft dabei ist, dass diese beiden Funkstandards auf unterschiedliche Frequenzen arbeiten, wodurch eine gegenseitige Beeinflussung ihrer Signale deutlich reduziert und damit das Risiko von Übertragungsfehlern gemindert wird. Außerdem werden hiermit zwei bereits ausgereifte Funkstandards miteinander kombiniert, was ihre Implementierung vereinfacht. Darüber hinaus weisen beide Standards eine hohe Verfügbarkeit und Verbreitung auf. Vorteilhaft dabei ist auch, dass der DECT-Standard eine sehr gute Sprachqualität und der IEEE802.11b-Standard eine für Datenübertragung zur Zeit ausreichend hohe Datenrate (ca. 11 MB/s) bietet. Da sowohl DECT bzw. ein dem DECT verwandter Standard, als auch der IEEE802.11b-Standard ein On-Site-Funkstandard ist, wird der Aufbau eines dichten Netzwerks ermöglicht, das insbesondere in Bereichen mit hohen Teilnehmerzahlen eine hohe Verfügbarkeit der Sprach- und der Datendienste ermöglicht.

In einer weiteren vorteilhaften Ausführungsform der Erfindung wird vorgeschlagen, einen Bluetooth-Standard für die Sprachübertragung mit einem IEEE802.11a-Standard für die Datenübertragung vorzusehen. Vorteilhaft dabei ist, dass auch diese beiden Funkstandards auf unterschiedliche Frequenzen arbeiten, wodurch eine gegenseitige Beeinflussung ihrer Signale deutlich reduziert und damit das Risiko von Übertragungsfehlern gemindert wird. Außerdem bietet der Bluetooth-Standard eine sehr gute Sprachqualität und der IEEE802.11a-Standard eine für Datenübertragung zur Zeit ausreichend hohe Datenrate an. Da sowohl der Bluetooth-Standard, als auch der IEEE802.11a-Standard ein On-Site-Funkstandard ist, wird der Aufbau eines dichten Netzwerks ermöglicht, das insbesondere in Bereichen mit hohen Teilnehmerzahlen eine hohe Verfügbarkeit der Sprach- und der Datendienste ermöglicht.

Das erfindungsgemäße Funksystem umfasst wenigstens eine Basisstation, die simultan einen ersten und einen zweiten Funkstandard zur Übertragung von Signalen nutzt. Hierdurch entsteht die Möglichkeit das Funksystem für die Übertragung von zwei unterschiedlichen Signalarten zu optimieren. Die beiden Funkstandards nutzen dabei unterschiedliche Frequenzen. Hierdurch wird eine gegenseitige Beeinflussung der Signale der beiden Funkstandards deutlich reduziert und damit das Risiko von Übertragungsfehlern gemindert.

Die Erfindung wird im Folgenden anhand von Zeichnungen näher erläutert. Es zeigen:
Fig. 1 schematisch den Aufbau eines ersten erfindungsgemäßen Access-Points;
Fig. 2 schematisch den Aufbau eines zweiten erfindungsgemäßen Access-Points;
Fig. 3 schematisch den Aufbau eines dritten erfindungsgemäßen Access-Points, und
Fig. 4 schematisch den Aufbau eines Funksystems mit zwei Access-Points und drei mobilen Endgeräten.

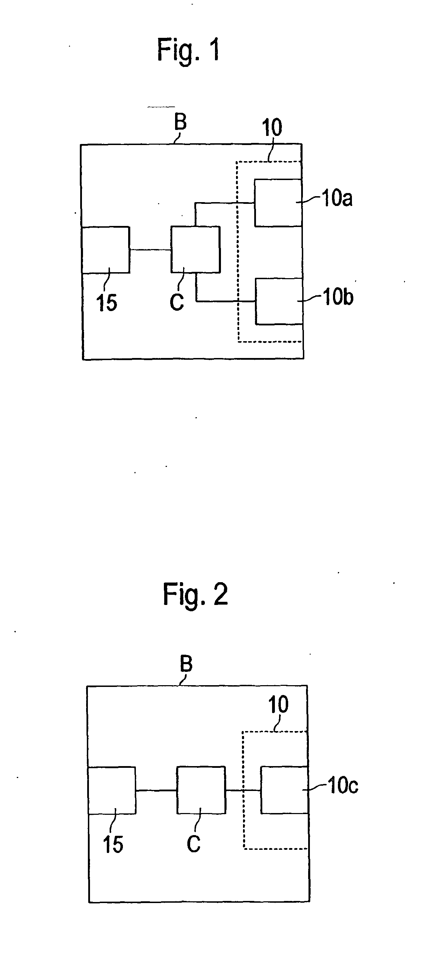

Figur 1 zeigt ein Ausführungsbeispiel eines erfindungsgemäßen Access-Points B. Der Access-Point B, im Weiteren auch Basisstation genannt, weist dabei eine erfindungsgemäße Einrichtung 10 zum Senden und Empfangen von Funksignalen auf. Um insbesondere zwei komplementäre Dienste anbieten zu können, weist die Einrichtung 10 dabei zwei gleichberechtigte Untereinheiten 10a, 10b auf, die jeweils eine Luftschnittstelle zum Senden und Empfangen von Funksignalen bilden. Jede dieser Untereinheiten 10a, 10b arbeitet dabei nach einem speziellen Funkstandard S, D, der jeweils einem der Dienste angepasst ist und weist eine dem jeweiligen Funkstandard S, D konforme Sende- und Empfangseinrichtung (hier nicht gezeigt) auf.

Dabei ist die erste Untereinheit 10a vorzugsweise für die Übertragung von Sprach- und Videosignalen vorgesehen. Um eine hohe Qualität der übertragenen Signale, auch Mediastreams genannt, zu sichern ist ein Funkstandard S notwendig, der eine kontinuierliche und sichere Verbindung erlaubt. Die hierfür vorgesehenen Funkstandards (z.B. DECT oder Bluetooth) bieten insbesondere eine hohe Verfügbarkeit (Quality of Service) auf einer relativ geringe Bandbreite an. Aufgrund seiner weiten Verbreitung eignet sich zur Übertragung von Sprach- und Videosignalen hierbei insbesondere der ETSI (European Telecommunication Standards Institute)-Standard DECT (Digital European Cordless Telephone).

Die zweite Untereinheit 10b dagegen ist vorzugsweise für die Übertragung von Datensignalen vorgesehen. Im Gegensatz zur Übertragung von Sprach- und Videosignalen eines Telefoniedienstes, ist der Bandbreitenbedarf einer paketorientierten Datenübertragung sehr hoch. Zugleich weist diese Übertragungsart einen unruhigen Wechsel zwischen aktiven Phasen und inaktiven Phasen auf. Die hierfür in Frage kommenden Funkstandards sind insbesondere breitbandige Standards, die kein Quality of Service anbieten. Einer dieser für die Datenübertragung optimierten Funkstandards ist der auch als Wireless-LAN bezeichnete IEEE802.11b-Standard. Für eine Implementierung dieses Funkstandards in die erfindungsgemäße Basisstation spricht insbesondere, dass der IEEE802.11b-Standard mittlerweile schon vielfach zum Einsatz gekommenen und seine Technologie daher schon genügend erprobt worden ist. Darüber hinaus genügt dieser Funkstandard einer der wichtigsten Voraussetzungen für eine Kombination mit dem DECT-Standard in einer Basisstation: Beide Funkstandards S, D DECT- und IEEE802.11b arbeiten auf verschiedenen lizenzfreien Frequenzbändern (1,8 GHz und 2,4 GHz). Daher ist eine gegenseitige Beeinflussung der durch die beiden Untereinheiten 10a und 10b gesendeten bzw. empfangenen Signale minimal.

Alternativ zur Kombination von DECT und IEEE802.11b ist z.B. auch eine Kombination von IEEE802.11a zur Datenübertragung mit 54 MB/s im 5 GHz Band mit Bluetooth zu Sprachübertragung im 2,4 GHz Band möglich. Auch weitere Datenübertragungsstandards, wie z.B. die Derivate von IEEE802.11x sind mit jeweils einem Standard, der sich zur Sprachübertragung eignet kombinierbar.

Um ein Verbindung zu weiteren festinstallierten Komponenten zu ermöglichen, weist die Basisstation B eine drahtgebundene Schnittstelle 15 auf. Diese Schnittstelle 15 ist vorzugsweise als eine Ethernet-Schnittstelle ausgebildet und erlaubt damit insbesondere eine Integration der Basisstation B in eine bestehende Netzinfrastruktur (Intranet und Internet). Alternativ kann die Anbindung auch über eine DSL-Schnittstelle oder über eine spezielle Schnittstelle zur Anbindung an ein anderes als ein Ethernet-Netzwerk erfolgen. Als Übertragungsprotokoll wird in den ersten beiden Fällen vorzugsweise das Internetprotokoll IP verwendet. Zur Übertragung von Daten sind dabei vorzugsweise alle über das Internetprotokoll IP gängigen Datenprotokolle einsetzbar. Aufgrund ihrer derzeit starken Verbreitung sind hierzu insbesondere das TCP- und das UTP-Datenprotokoll vorgesehen.

Wegen seiner Kompatibilität zum Ethernet bzw. DSL eignet sich der verwendete IEEE802.11b-Standard auch zur Datenübertragung auf der drahtgebundenen Seite der Basisstation B. Daher ist bei einer Datenweiterleitung von der Luftschnittstelle 10b zur Ethernet- bzw. DSL-Schnittstelle 15 keine aufwendige Umsetzung der Datenpakete notwendig.

Im Gegensatz hierzu bildet der zur Sprach- und Videoübertagung verwendete DECT-Standard einen zum Übertragungsstandard der drahtgebundenen Schnittstelle 15 inkompatiblen Standard. Daher werden die Sprach- und Video-Signale der Untereinheit 10b für eine Übertragung über das physikalische Netzwerk NET vorzugsweise mit Hilfe einer Umsetzereinheit 20 vom DECT-Standard auf einen Voice-over-IP-Standard umgesetzt. Hierzu ist eine Umsetzereinheit 20 vorgesehen, in der ein spezieller Standard (H.323 oder SIP) implementiert ist. Dabei kann die Umsetzereinheit 20 entweder in der Basisstation B selbst oder an einer beliebigen anderen Stelle im IP-Netz ausgebildet sein. Die in Figur 1 gezeigte Basisstation B weist keine interne Umsetzereinheit 20 auf. Die DECT-Protokollelemente der zweiten Untereinheit 10b müssen daher in der drahtgebundenen Schnittstelle 15 in IP-Pakete verpackt und über eine IP-Verbindung V an eine externe Umsetzereinheit 20 gesendet (getunnelt) werden.

Die Steuerung der Kommunikation der verschiedenen Schnittstellen 10a, 10b, 15 übernimmt bei der in Figur 1 gezeigten Basiseinheit B eine Kontrolleinheit C, die in dem Ausführungsbeispiel zentral ausgebildet ist und über separate Verbindungsleitungen mit jeder der drei Schnittstellen 10a, 10b, 15 verbunden ist.

Figur 2 zeigt ein weiteres Ausführungsbeispiel einer erfindungsgemäßen Basisstation B. Dabei weist die Basisstation B zur Anbindung an ein physikalisches Netzwerk NET eine drahtgebundene Schnittstelle 15 auf, die vorzugsweise analog zu der in Figur 1 gezeigten drahtgebundenen Schnittstelle 15 ausgebildet ist.

Zur Steuerung der Kommunikation zwischen den Schnittstellen 15, 10c der Basisstation B ist analog zur Figur 1 eine zentrale Kontrolleinheit C ausgebildet.

Zum Aufbau von drahtlosen Verbindungen weist die Basisstation B eine Einrichtung 10 zum Senden und Empfangen von Signalen auf, in der ein Funkstandard S zu Übertragung von Sprach- und Videosignalen und ein Funkstandard D zur Übertragung von Daten implementiert ist. Im Unterschied zur Figur 1, weist die Einrichtung 10 jedoch eine einzige Untereinheit 10c auf, in der beide Funkstandards S, D integriert sind. Zur Anbindung der Untereinheit 10c ist daher ist nur eine einzige Verbindung zwischen der zentralen Kontrolleinheit C und der Einrichtung 10 notwendig.

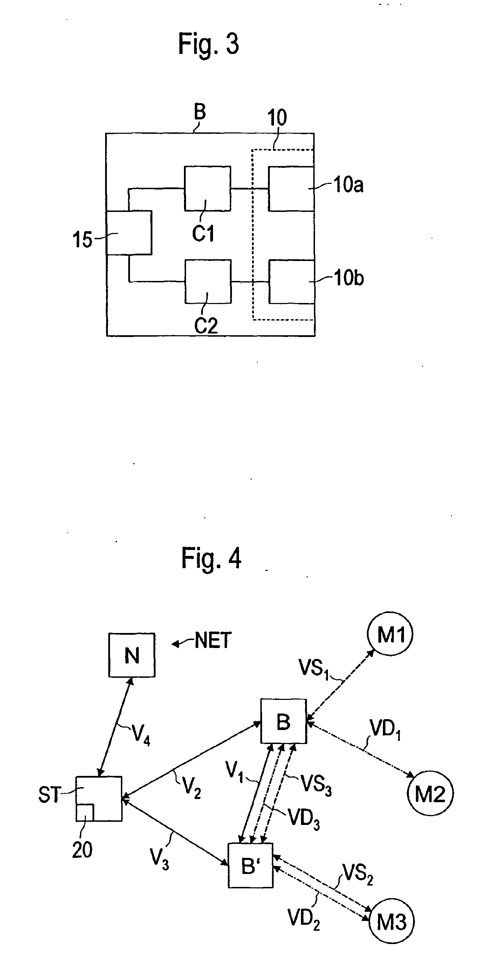

Figur 3 zeigt ein drittes Ausführungsbeispiel einer erfindungsgemäßen Basisstation, deren Aufbau im wesentlichen dem in Figur 1 gezeigten Aufbau entspricht, wobei jedoch zur vereinfachten Steuerung die beiden Luftschnittstelleneinheiten 10a, 10b jeweils eine separate Kontrolleinheit C1, C2 aufweisen, die die jeweilige Luftschnittstelle mit der Netzwerkschnittstelle 15 verbinden.

Figur 4 zeigt ein erfindungsgemäßes Funksystem bestehend aus zwei Basisstationen B, B' und drei mobilen Endgeräten M1, M2, M3, die über drahtlose Übertragungsstrecken VS₁, VS₂, VS₃, VD₁, VD₂, VD₃ miteinander verbunden sind.

Jede der beiden Basisstationen B, B' weist dabei, wie in Figur 1 oder 2 gezeigt, eine Einrichtung 10 zur drahtlosen Signalübertragung nach einem ersten und einem zweiten Funkstandard S, D auf, um Sprach- bzw. Videosignale und Daten gleichzeitig senden bzw. empfangen zu können. Die Funkverbindungen VS₁, VS₂, VS₃, VD₁, VD₂, VD₃ zwischen den Basisstationen B, B' und den mobilen Endgeräten M1, M2, M3 sind dabei als unterbrochene Linien dargestellt. Hierbei stellt eine gestrichelte Linie eine Funkverbindung nach einem für Sprach- und Videoübertragung optimierten Funkstandard S (DECT) und eine strichgepunktete Linie eine Funkverbindung dar, die ein zur Datenübertragung vorgesehenen Funkstandard D (IEEE802.11b) nutzt.

Eine bidirektionale Übertragungsstrecke ist dabei durch Pfeile an beiden Enden der jeweiligen Linien gekennzeichnet.

In dem in Fig. 4 dargestellten Szenario tauscht die erste Basisstation B über eine erste drahtlose Verbindung VS₁ Sprach- bzw. Videosignale mit dem ersten mobilen Endgerät M1 und über eine zweite Verbindung VD₁ Daten mit dem zweiten mobilen Endgerät M2 aus.

Die zweite Basisstation B' dagegen kommuniziert mit dem dritten mobilen Emittergerät M3 über zwei separate drahtlose Verbindungen VS₂ VD₂. Hierbei werden zwischen der Basisstation B' und dem dritten mobilen Endgerät M3 gleichzeitig Sprach- bzw. Videosignale über die dritte drahtlose Verbindungsstrecke VS₂ und Daten über die vierte drahtlose Verbindungsstrecke VD₂ ausgetauscht.

Ferner sind in dem hier dargestellten Szenario zwei weitere drahtlose Verbindungsstrecken VS₃ VD₃ zwischen den beiden Basisstationen B, B' ausgebildet. Diese beiden vorzugsweise optional ausgebildeten Verbindungsstrecken VS₃ VD₃ dienen den beiden Basisstationen B, B' zur Kommunikation, insbesondere wenn eine fest verdrahtete Verbindung zwischen den beiden Basisstationen B, B' nicht vorliegt. Zur Anbindung der Basisstation B, B' an eine bestehende Netzinfrastruktur (z.B. Intranet, Internet) weist jede der beiden Basisstationen B, B' vorzugsweise eine Ethernetschnittstelle 15 auf. Über die Ethernetschnittstelle 15 ist jede der beiden Basisstationen B, B' an eine zentrale Steuereinheit 2 abgebunden, die eine Mobilitätsüberwachung und -steuerung (Roaming und Handover) der mobilen Endgeräte M1, M2, M3 durchführt. Die zentrale Steuereinheit ST führt darüber hinaus eine Benutzer- und Geräteauthentifizierung der mobilen Endgeräte M1, M2, M3 durch.

In dem hier dargestellten Ausführungsbeispiel ist eine Umsetzereinheit 20 innerhalb der Steuereinheit ST implementiert. Die Umsetzereinheit 20 dient dabei dazu Sprach- und Videosignale von dem DECT- auf einen Voice-over-IP-Standard umzusetzen. Die über eine drahtlose Verbindung einer der Basisstationen B, B' empfangenen DECT-Signale werden von den Basisstationen B, B' über eine jeweilige Ethernet-Verbindung V₂, V₃ zur innerhalb der Steuereinheit ST implementierten Umsetzereinheit 20 über IP übertragen (getunnelt), wo sie vom DECT auf einen Voice-over-IP-Standard umgesetzt werden und über die bestehende Netzinfrastruktur NET an weitere Teilnehmer, z.B. von der Steuereinheit ST über eine weitere Netzwerkverbindung V₄ an eine weitere Netzwerkkomponente N, gesendet werden. Die Netzwerkkomponente N kann dabei z.B. eine Zugangskomponente (Gateway) zu einem externen Netzwerk darstellen. Über die Netzwerkkomponente N kann darüber hinaus auch eine Anbindung an ein öffentliches oder privates Telekommunikationsnetz hergestellt werden.

Die in Figur 4 gezeigten Basisstationen B, B' bilden ein einfaches Funknetz, in dessen Abdeckungsbereich den mobilen Endgeräten M1, M2, M3 der in den beiden Basisstationen B, B' implementierten Sprach- und Datendienst zur Verfügung stehen. Es ist jedoch im Sinne der Erfindung, ein Funksystem mit einer Vielzahl von Basisstationen vorzusehen. Ferner ist es auch im Sinne der Erfindung, dass das Funksystem auch heterogene Basisstationen aufweist, in denen auch andere Funkstandards implementiert sind, als die zwei in den beiden Basisstationen B, B' kombinierten Funkstandards.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

### Bezugszeichenliste

- B: Basisstation
- M: drahtloses Endgerät
- S: Standard zur Sprachübertragung
- D: Standard zur Datenübertragung
- ST: Steuereinheit
- C: Kontrolleinheit der Basisstation
- NET: physikalisches Netzwerk
- N: Netzwekkomponente
- V: Netzwerkverbindung
- VS: drahtlose Verbindung zur Sprachübertragung
- VD: drahtlose Verbindung zur Datenübertragung
- 10: Einrichtung zum Senden und Empfangen von Signalen
- 15: drahtgebundene Schnittstelle der Basisstation
- 20: Umsetzereinheit

## Patentansprüche

1. Funksystem mit mindestens einer Basisstation (B'), mindestens einem mobilen Endgerät (M3) und einer Steuereinheit (ST),
wobei die Basisstation (B') eine Einrichtung (10) zum Senden und Empfangen von Signalen zur Sprach- und Datenübertragung aufweist, die ausgelegt ist, einen ersten für die Sprachübertragung optimierten Funkstandard und einen zweiten für Datenübertragung optimierten Funkstandard simultan einzusetzen, wobei der erste Funkstandard ein DECT-Standard, ein dem DECT verwandter Standard oder ein Bluetooth-Standard ist und der zweite Funkstandard ein IEEE802.11x-Derivat ist und die beiden Funkstandards unterschiedliche Frequenzbänder nutzen,
wobei die Basisstation (B') und das mobile Endgerät (M3) ausgelegt sind, gleichzeitig Sprach- bzw. Videosignale über eine erste drahtlosen Verbindungs strecke (VS₂) unter Einsatz des ersten Funkstandards und Daten über eine zweite drahtlose Verbindungsstrecke (VD₂) unter Einsatz des zweiten Funkstandards auszutauschen, und
wobei die Steuereinheit (ST) ausgelegt ist, die Kommunikation zwischen der Basisstation (B') und dem mobilen Endgerät (M3) zu steuern.

2. Funksystem nach Anspruch 1, wobei der erste Funkstandard ein DECT-Standard oder ein dem DECT verwandter Standard ist und der zweite Funkstandard ein IEEE802.11b-Standard ist.

3. Funksystem nach Anspruch 1, wobei der erste Funkstandard ein Bluetooth-Standard ist und der zweite Funkstandard ein IEEE802.11a-Standard ist.

4. Funksystem nach einem der Ansprüche 1 bis 3, wobei die Basisstation (B, B') eine Schnittstelle (15) zum Anbinden an ein physikalisches Netzwerk (NET) über die Steuereinheit (ST) aufweist.

5. Funksystem nach Anspruch 4, wobei die Schnittstelle (15) eine Ethernet- oder eine DSL-Schnittstelle ist.

6. Funksystem nach Anspruch 3 oder 4, wobei als Protokoll für eine Datenübertragung über die Schnittstelle (15) ein IP-Protokoll vorgesehen ist.

7. Funksystem nach einem der Ansprüche 3 bis 6, wobei als Datenprotokoll für die über die Schnittstelle (15) übertragenen Daten TCP oder UDP vorgesehen ist.

8. Funksystem nach einem der Ansprüche 1 bis 7, wobei die Steuereinheit (ST) für eine Benutzer- und Geräteauthentifizierung ausgelegt ist.

9. Funksystem nach einem der Ansprüche 1 bis 8, wobei eine Umsetzereinheit (20) vorgesehen ist, um Signalisierungen und Sprach- und Videosignale von dem Funkstandard zur Sprachübertragung auf einen Voice-over-IP-Standard umzusetzen.

10. Funksystem nach Anspruch 8, wobei die Umsetzereinheit (20) als eine H.323- oder SIP-Umsetzereinheit ausgebildet ist.

11. Funksystem nach einem der Ansprüche 1 bis 10, wobei das Funksystem an ein öffentliches oder privates Telekommunikationsnetz angeschlossen ist.

## Claims

1. Radio system having at least one base station (B'), at least one mobile terminal (M3) and a control unit (ST),
with the base station (B') having a device (10) for transmission and reception of signals for speech and data transmission, which is designed to use a first radio standard, which is optimized for speech transmission, and a second radio standard, which is optimized for data transmission, simultaneously, with the first radio standard being a DECT standard, a standard which is related to DECT or a Bluetooth standard, and the second radio standard being an IEEE802.11x derivative, and with the two radio standards using different frequency bands,
with the base station (B') and the mobile terminal (M3) being designed to interchange speech and/or video signals simultaneously via a first wire-free connecting path (VS₂) using the first radio standard and data via a second wire-free connecting path (VD₂) using the second radio standard, and
with the control unit (ST) being designed to control the communication between the base station (B') and the mobile terminal (M3).

2. Radio system according to Claim 1, with the first radio standard being a DECT standard or a standard which is related to DECT, and the second radio standard being an IEEE802.11b standard.

3. Radio system according to Claim 1, with the first radio standard being a Bluetooth standard, and the second radio standard being an IEEE802.11a standard.

4. Radio system according to one of Claims 1 to 3, with the base station (B, B') having an interface (15) for connection to a physical network (NET) via the control unit (ST).

5. Radio system according to Claim 4, with the interface (15) being an Ethernet interface or a DSL interface.

6. Radio system according to Claim 3 or 4, with an IP protocol being provided as the protocol for data transmission via the interface (15).

7. Radio system according to one of Claims 3 to 6, with TCP or UDP being provided as the data protocol for the data transmitted via the interface (15).

8. Radio system according to one of Claims 1 to 7, with the control unit (ST) being designed for user and appliance authentication.

9. Radio system according to one of Claims 1 to 8, with a converter unit (20) being provided, in order to convert signalling as well as speech and video signals from the radio standard for speech transmission to a voice-over-IP standard.

10. Radio system according to Claim 8, with the converter unit (20) being designed as an H.323 or SIP converter unit.

11. Radio system according to one of Claims 1 to 10, with the radio system being connected to a public or private telecommunication network.

## Revendications

1. Système radio ayant au moins une station (B') de base, au moins un terminal (M3) mobile et une unité (ST) de commande,
dans lequel la station (B') de base a un dispositif (10) d'émission et de réception de signaux pour la transmission de paroles et de données qui est conçu pour utiliser simultanément une première norme radio optimisée pour la transmission de la parole et une deuxième norme radio optimisée pour la transmission de données, la première norme radio étant une norme DECT, une norme apparentée à la DECT ou une norme Bluetooth et la deuxième norme radio étant un dérivé de IEEE802.11x et les deux normes radio utilisant des bandes de fréquences différentes,
dans lequel la station (B') de base et le terminal (M3) mobile sont conçus pour échanger simultanément des signaux vocaux ou vidéo par une première section (VS₂) de liaison sans fil en utilisant la première norme radio et des données par une deuxième section (VD₂) de liaison sans fil en utilisant la deuxième norme radio, et
dans lequel l'unité (ST) de commande est conçue pour commander la communication entre la station (B') de base et le terminal (M3) mobile.

2. Système radio suivant la revendication 1, dans lequel la première norme radio est une norme DECT ou une norme dérivée du DECT et la deuxième norme radio est une norme IEEE802.11b.

3. Système radio suivant la revendication 1, dans lequel la première norme radio est une norme Bluetooth et la deuxième norme radio est une norme IEEE802.11a.

4. Système radio suivant l'une des revendications 1 à 3, dans lequel la station (B, B') de base a une interface (15) de liaison à un réseau (NET) physique par l'unité (ST) de commande.

5. Système radio suivant la revendication 4, dans lequel l'interface (15) est une interface Éthernet ou une interface DSL.

6. Système radio suivant la revendication 3 ou 4, dans lequel il est prévu un protocole IP comme protocole pour une transmission de données par l'interface (15).

7. Système radio suivant l'une des revendications 3 à 6, dans lequel il est prévu TCP ou UDP comme protocole de données pour les données transmises par l'interface (15).

8. Système radio suivant l'une des revendications 1 à 7, dans lequel l'unité (ST) de commande est conçue pour une authentification de l'utilisateur et du terminal.

9. Système radio suivant l'une des revendications 1 à 8, dans lequel il est prévu une unité (20) de convertisseur pour convertir des signalisations et des signaux vocaux et vidéo de la norme radio pour la transmission vocale à une norme Voice-over-IP.

10. Système radio suivant la revendication 9, dans lequel l'unité (20) de convertisseur est constituée sous la forme d'une unité de convertisseur H.323 ou SIP.

11. Système radio suivant l'une des revendications 1 à 10, dans lequel le système radio est raccordé à un réseau de télécommunication public ou privé.
